# EUROPÄISCHE PATENTSCHRIFT

(11) **EP 0 962 331 B1**
(45) Veröffentlichungstag und Bekanntmachung des Hinweises auf die Patenterteilung: **04.08.2004**
(21) Anmeldenummer: 99109432.7
(22) Anmeldetag: 11.05.1999
(51) Int. Cl.: B41M 5/26, B44F 1/06, B32B 17/10

(54) **Verwendung eines lasersensiblen Lacks zur Herstellung einer laserbeschriftbaren Glasscheibe**
Use of a laser-sensitive laquer for the manufacture of a laser-writable glass panel
Utilisation d'une laque sensible au laser pour la fabrication d'une feuille de verre, marquable au laser

(30) Priorität: 30.05.1998 DE 19824349
(43) Veröffentlichungstag der Anmeldung: 08.12.1999
(73) Patentinhaber: Tesa AG, 20253 Hamburg (DE)
(72) Erfinder: Koops, Arne, 23881 Breitenfelde (DE); Pfaff, Ronald, Dr., 22335 Hamburg (DE); Kreft, Christian, 21077 Hamburg (DE)

(56) Entgegenhaltungen:
- DE-A- 3 826 355
- US-A- 5 063 137
- US-A- 5 449 426
- US-A- 5 626 966

## Beschreibung

Die Erfindung betrifft die Verwendung eines lasersensiblen Lacks zur Herstellung laserbeschriftbarer Glasscheiben.

Bei der Identifizierung und Kennzeichnung von Produkten, Steuerung von Fertigungsprozessen sowie zur Qualitätskontrolle werden häufig lesbare Informationen auf einem Bauteil aufgebracht, so unter anderem auch auf Gläsern.
Bisher werden Gläser, die einen einschichtigen oder einen mehrschichtigen Aufbau aufweisen können, mit Etiketten, mechanischer Gravur oder chemischen Ätzverfahren gekennzeichnet. Etiketten sind für dauerhafte Kennzeichnungen ungeeignet, die beiden nachgenannten Kennzeichnungen werden aufgrund des aufwendigen Verfahrens häufig nicht eingesetzt.

Aus der US 5,063,137 A ist ein Verfahren zur Laserbeschriftung bekannt, in dem die Oberfläche eines Objektes mittels eines Laserstrahls verändert wird. Das Objekt besteht aus einer Harzmischung, die zumindest ein anorganisches Additiv enthält.
Diese besagte Mischung kann darüber hinaus auch auf einem beliebigen Untergrund aufgebracht werden, so daß, wenn durch den Laser anschließend eine Veränderung der Mischung erfolgt, der Untergrund wie gewünscht beschriftet werden kann.

Der Erfindung liegt die Aufgabe zugrunde, laserbeschriftbare Glasscheiben zur Verfügung zu stellen, die einfach herstellbar sind, die eine hohe Fälschungssicherheit aufweisen und die allgemein die Nachteile des Standes der Technik vermeiden oder zumindest vermindern.

Diese Aufgabe wird durch die Verwendung eines lasersensiblen Lacks zur Herstellung der laserbeschriftbaren Glasscheiben gelöst, wie diese im Hauptanspruch näher gekennzeichnet ist. Die Unteransprüche stellen dabei vorteilhafte Weiterbildungen des Erfindungsgegenstandes dar. Des weiteren umfaßt die Erfindung ein Verfahren zur Herstellung eines laserbeschriftbaren Verbundglases.

Demgemäß schlägt die Erfindung die Verwendung eines lasersensiblen Lacks zur Herstellung laserbeschriftbarer Glasscheiben vor, wobei der lasersensible Lack besteht aus einem Basispolymer und aus einem strahlungssensiblen Additiv, das unter Laserbestrahlung einen Farbumschlag zeigt. Bei dem Lacksystem kann es sich auch um ein farbiges oder undurchsichtiges Lacksystem handeln, welches unter Laserbestrahlung eine Entfärbung aufweist.

Dieser lasersensible Lack wird zumindest partiell zwischen zwei Glasscheiben aufgetragen und ausgehärtet. Als Auftragsverfahren eignen sich bekannte Techniken wie Gießen, Beschichten. Anschließend werden die Glasscheiben mittels eines Lasers beschriftet.

Vorzugsweise ist das Basispolymer gewählt aus der Gruppe der ungesättigten Polyester, Epoxy-, Polyester- und Urethanacrylate, ganz besonders bevorzugt ein aliphatisches Polyurethanacrylat, wie sie auch für UV-Druckfarben oder ESH-Beschichtungen in der Möbelindustrie Anwendung finden.

Darüber hinaus ist das Basispolymer vorteilhafterweise abgemischt mit farbgebenden Pigmenten, Lichtschutzmitteln, Hitzestabilisatoren oder Verarbeitungshilfsmitteln. Die Wahl der genannten Zusatzstoffe ist dabei davon abhängig, welche Eigenschaften der lasersensible Lack aufweisen soll.

Das Basispolymer enthält das strahlungssensible Additiv vorzugsweise zu einem Konzentrationsbereich von 0,001 Gew.-% bis 3 Gew.-%, bezogen auf das hochmolekulare Prepolymer, wobei das strahlungssensible Additiv insbesondere ein Farbpigment oder ein Metallsalz wie ein Kupfersalz oder eine Titanverbindung ist. Als geeignet zeigen sich darüber hinaus weiße und farbige Perlglanz-Pigmente auf der Basis von Glimmer und Titandioxid beziehungsweise Eisen(III)-oxid. Bevorzugt eingesetzt werden Kupferhydroxidphoshat oder iriodin©.

Die Additive werden in das Basispolymer eingearbeitet und liegen feinverteilt vor. Die Einarbeitung des strahlungssensiblen Additivs in das Basispolymer erfolgt nach bekannten Methoden, beispielsweise derart, daß man das Additiv in Form von Masterbatches dem hochmolekularen Basispolymer unter Verwendung von Extrudern, Walzwerken, Misch- oder Mahlapparaten zumischt.

Erfindungsgemäß bevorzugt sind lasersensible Pigmente, die im sichtbaren Wellenlängenbereich kaum absorbieren oder aufgrund der geringen Konzentration transparente und klare Lackschichten ergeben.

Der lasersensible Lack wird zwischen zwei Glasscheiben aufgetragen und ausgehärtet, wobei der Lack als Verbundmedium zwischen den Glasscheiben dient.

Dann ist im Sinne der vorliegenden Erfindung auch die Beschichtung des Lackes auf die Außenflächen von Verbundsicherheitsglasscheiben, wie sie verwendet werden, um schmutzabweisend oder kratzfeste Scheiben zu erhalten.

Eine weitere Einsatzmöglichkeit eines laserbeschriftbaren Lackes ist die Kantenversiegelung von Verbundsicherheitsglasscheiben, insbesondere von Fahrzeugverbundscheiben, zum Beispiel bei der Oberkante von herunter kurbelbaren Autofensterscheiben. Die Polymerisate als Basispolymer können auf Glasscheiben durch alle üblichen Techniken, beispielsweise durch Aufstreuen von Pulver oder Auflegen eine Folie und anschließendes Aufschmelzen zu einem festhaftenden Film, aufgebracht werden. Das Aufbringen von wäßrigen Emulsionen ist ebenfalls möglich.

Schließlich kann der lasersensible Lack besonders vorteilhaft in einem Verfahren zur Herstellung eines laserbeschriftbaren Verbundglases eingesetzt werden, wobei das Verfahren die folgenden Schritte umfaßt:
a) zwei Glasscheiben werden derartig miteinander verklebt, daß zwischen ihnen ein Hohlraum verbleibt,
b) der zwischen den Glasscheiben vorhandene Hohlraum wird mit einem Lack soweit verfüllt, daß nur ein kleiner Teilbereich verbleibt,
c) in den Teilbereich wird der lasersensible Lack eingefüllt,
d) dann erfolgt eine strahlenchemische Aushärtung des Lacks, und
e) abschließend erfolgt die Beschriftung des Verbundglases mittels eines Lasers.

Zur Beschriftung der erfindungsgemäß in Frage kommenden Glasschichten werden energiereiche Quellen wie Laser verwendet. Beispiele für solche Quellen sind die Feststoffkörperlaser wie Neodym-Yttrium-Aluminium-Granat-Laser (NdYAG-Laser), die in einer Wellenlänge von 1,06 µm emittieren. Laser können durch gute Einstellbarkeit ihrer Laserparameter wie beispielsweise Pulsfrequenz, Lampenstrom und Geschwindigkeit des Laserstrahls auf eine optimale Abstimmung an die Bedürfnisse der zu beschriftenden Materialien eingesetzt werden.
Dabei ist eine Einstellung zu wählen, welche für das lasersensible Pigment die höchste Wechselwirkung bedeutet, die jedoch für das Glas und die ausgehärtete Lackschicht kaum Veränderungen erwarten läßt.

Durch das Auftreffen des Laserstrahls tritt in der lasersensiblen Schicht an den bestrahlten Stellen ein Farbumschlag mit einem ausgeprägten Kontrast auf.

Das Verfahren ermöglicht eine lebenslange Kennzeichnung der Glasscheiben mit Barcodes, Logos sowie mit Klarschrift, darüber hinaus auch eine Markierung, welche bei Verbundgläsem innerhalb des Glases liegt und dadurch im höchsten Maße abrieb- und kratzfest ist. Eine Kennzeichnung besitzt somit die gleich hohe Beständigkeit wie das Glas selbst.
Die Beschriftung ist korrosionsbeständig, dimensionsstabil, deformationsfrei, licht-, hitzeund wetterbeständig. Es können mit dem erfindungsgemäßen Lack gute Lesbarkeit, hohe Auflösung und kleinste Beschriftungsgrößen erzielt werden.
Außerdem wird nicht wie bei üblichen Verfahren das Glas durch Gravur oder chemischen Ätzungen in der mechanischen und physikalischen Eigenschaften beeinträchtigt. Dies ist besonders hervorzuheben bei der Kennzeichnung empfindlicher Gläser, wie sie bei Fenster in Sicherheitsbereichen oder in Fahrzeugen als Windschutzscheiben eingesetzt werden.
Die einfache und sichere Beschriftung von Glasscheiben, die beispielsweise auch nach dem Einbau in das Fahrzeug, auf oder in der Glasscheibe erfolgen kann und beispielsweise die Fahrzeugnummer trägt, kann als zusätzliche Diebstahlsicherung verwendet werden.
Aber auch die Kennzeichnung der Gläser mit einer Marke ist hervorragend möglich, so beispielsweise bei Brillengläsern.

Bei dem erfindungsgemäßen lasersensiblen Lack erfolgt der Farbumschlag durch direkte farbliche Veränderung des Additivs selber oder der unmittelbar angrenzenden Umgebung durch Zersetzungsprozesse (Karbonisierung) der umgebenden Kunststoffmatrix.
Letzteres stellt sich bei der besonders vorteilhaften Verwendung von Kupferhydroxidphoshat ein. Ein Aufschäumen des Basispolymers tritt nicht auf, weil keine oder nur sehr wenige Crackgase erzeugt werden.

Damit ist während des Beschriftungsprozesses gewährleistet, daß keine oder zumindest nur geringe Emissionen von Spaltprodukten auftreten.
Derartige Spaltprodukte können unter anderem zu einer Aufsprengung des Verbundes bei einer Verbundglasscheibe führen, wenn nicht Sorge getragen wird, daß derartige Produkte zuvor abgeleitet werden.

Im folgenden soll die Erfindung durch Beispiele näher gekennzeichnet werden, ohne damit diese unnötig einschränken zu wollen.

### Beispiel 1

Entsprechend der DE G 81 30 861 wird der strahlenhärtende Lack aus 90 Gew.-% eines handelsüblichen Polyurethanacrylats und 10 Gew.-% HDDA hergestellt. Durch intensives Rühren werden 0,1 Gew.-% Kupferhydroxidphosphat und 0,5 Gew.-% Photoinitiator Irgacure 184 eingearbeitet.

Dieser transparente Lack wird durch ein spezielles Gießverfahren in den Hohlraum der beiden Glasplatten gebracht und durch ultraviolette Strahlung (UV) ausgehärtet.

Der entstandene Verbund zwischen Lackschicht und Glas kann nun mit eine Beschriftungslaser tesa Label Laser® mit einer Wellenlänge von 1,06 µm durch die oberen Glasschichten hindurch beschriftet werden. Es entstehen dabei konturenscharfe und kontrastreiche Beschriften, die keine weitere Einwirkung auf den Verbund haben. Eine Belaserung kann Barcodes erzeugen, die automatisch lesbar sind.

### Beispiel 2

Analog Beispiel 1 wird statt dem lasersensitiven Additiv Kupferhydroxidphosphat ein Farbstoff eingesetzt, der eine Entfärbung in den Bereichen der Laserstrahlbearbeitung ergibt. Dadurch können dekorative Glasbearbeitungen im Bereich von Haus-, Möbeltüren und Automobilscheiben erzeugt werden. Zusätzlich sind Masken für technische Anwendungen herstellbar.

## Patentansprüche

1. Verwendung eines lasersensiblen Lacks zur Herstellung laserbeschriftbarer Glasscheiben, wobei der lasersensible Lack, bestehend aus
a) einem Basispolymer und
b) einem strahlungssensiblen Additiv, das unter Laserbestrahlung einen Farbumschlag zeigt,
zumindest partiell zwischen zwei Glasscheiben aufgetragen und ausgehärtet wird und wobei die Glasscheiben anschließend mittels eines Lasers beschriftet werden können.

2. Verwendung eines lasersensiblen Lacks nach Anspruch 1, **dadurch gekennzeichnet, daß**
das Basispolymer gewählt ist aus der Gruppe der ungesättigten Polyester, Epoxy-, Polyester- und Urethanacrylate, besonders bevorzugt ein aliphatisches Polyurethanacrylat.

3. Verwendung eines lasersensiblen Lacks nach Anspruch 1, **dadurch gekennzeichnet, daß**
das Basispolymer abgemischt ist mit farbgebenden Pigmenten, Lichtschutzmitteln, Hitzestabilisatoren oder Verarbeitungshilfsmitteln.

4. Verwendung eines lasersensiblen Lacks nach Anspruch 1, **dadurch gekennzeichnet, daß**
das Basispolymer das strahlungssensible Additiv zu einem Konzentrationsbereich von 0,001 Gew.-% bis 3 Gew.-% enthält.

5. Verwendung eines lasersensiblen Lacks nach Anspruch 1, **dadurch gekennzeichnet, daß**
das strahlungssensible Additiv ein Farbpigment oder ein Metallsalz ist, bevorzugt Kupferhydroxidphoshat oder weiße und farbige Perlglanz-Pigmente auf der Basis von Glimmer und Titandioxid beziehungsweise Eisen(III)-oxid.

6. Verfahren zur Herstellung eines beschriftbaren Verbundglases, wobei
a) zwei Glasscheiben derartig miteinander verklebt werden, daß zwischen ihnen ein Hohlraum verbleibt,
b) der zwischen den Glasscheiben vorhandene Hohlraum mit einem Lack soweit verfüllt wird, daß nur ein kleiner Teilbereich verbleibt,
c) in den Teilbereich der lasersensible Lack gemäß Anspruch 1 eingefüllt wird,
d) eine strahlenchemische Aushärtung des Lacks erfolgt und
e) die Beschriftung des Verbundglases mittels eines Lasers erfolgt.

## Claims

1. Use of a laser-sensitive coating for the production of laser-inscribable sheets of glass, where.the laser-sensitive coating, consisting of
a) a base polymer and
b) a radiation-sensitive additive which exhibits a colour change on laser irradiation,
is at least partially applied between two sheets of glass and hardened, and where the sheets of glass can be subsequently inscribed by means of a laser.

2. Use of a laser-sensitive coating according to Claim 1, **characterized in that** the base polymer is selected from the group consisting of unsaturated polyesters, epoxy, polyester and urethane acrylates, particularly preferably an aliphatic polyurethane acrylate.

3. Use of a laser-sensitive coating according to Claim 1, **characterized in that** the base polymer has been mixed with colouring pigments, light stabilizers, heat stabilizers or processing aids.

4. Use of a laser-sensitive coating according to Claim 1, **characterized in that** the base polymer contains the radiation-sensitive additive in a concentration in the range from 0.001% by weight to 3% by weight.

5. Use of a laser-sensitive coating according to Claim 1, **characterized in that** the radiation-sensitive additive is a colour pigment or a metal salt, preferably copper hydroxide phosphate or white and coloured pearlescent pigments based on mica and respectively titanium dioxide and iron (III) oxide.

6. Process for the production of an inscribable multilayer glass, where
a) two glass sheets are bonded to one another in such a way that a cavity remains between them,
b) the cavity present between the glass sheets is filled with a coating material to such an extent that only a small partial region remains,
c) the laser-sensitive coating material according to Claim 1 is introduced into the partial region,
d) a radiation-chemical hardening of the coating is carried out, and
e) the multilayer glass is inscribed by means of a laser.

## Revendications

1. Utilisation d'un vernis sensible au laser pour la fabrication de vitres aptes à être gravées au laser, le vernis sensible au laser, qui est constitué de:
a) un polymère de base et
b) un additif sensible au rayonnement qui manifeste une modification de teinte sous irradiation laser
étant appliqué et étant durci au moins dans une partie située entre deux feuilles de verre, les vitres pouvant ensuite être gravées au moyen d'un laser.

2. Utilisation d'un vernis sensible au laser selon la revendication 1, **caractérisée en ce que** le polymère de base est sélectionné dans le groupe des polyesters insaturés et des acrylates d'époxy, de polyester et d'uréthane, et est de façon particulièrement préférable un poly(acrylate d'uréthane) aliphatique.

3. Utilisation d'un vernis sensible au laser selon la revendication 1, **caractérisée en ce qu'**on mélange au polymère de base des pigments colorants, des agents de protection contre la lumière, des agents de stabilisation vis-à-vis de la chaleur ou des agents auxiliaires de traitement.

4. Utilisation d'un vernis sensible au laser selon la revendication 1, **caractérisée en ce que** le polymère de base contient l'additif sensible au rayonnement dans une plage de concentration de 0,001% en poids à 3% en poids.

5. Utilisation d'un vernis sensible au laser selon la revendication 1, **caractérisée en ce que** l'additif sensible au rayonnement est un pigment coloré ou un sel métallique, de préférence l'hydrogénophosphate de cuivre ou des pigments blancs ou colorés à brillant perlé à base de mica et de dioxyde de titane ou d'oxyde de fer (III).

6. Procédé de fabrication d'un verre feuilleté apte à être gravé, dans lequel
a) deux feuilles de verre sont collées l'une à l'autre de manière à laisser entre elles un espace creux,
b) l'espace creux situé entre les feuilles de verre est rempli d'un vernis de manière à y laisser uniquement une petite zone vide,
c) la petite zone vide est remplie du vernis sensible au laser selon la revendication 1,
d) on réalise un durcissement chimique du vernis par irradiation et
e) la gravure du verre,feuilleté s'effectue au moyen, d'un laser.
